Europäisches Patentamt

European Patent Office

Office européen des brevets

(19)

(11) Numéro de publication : **0 517 583 A1**

(12) **DEMANDE DE BREVET EUROPEEN**

(21) Numéro de dépôt : **92401513.4**

(22) Date de dépôt : **03.06.92**

(51) Int. Cl.⁵ : **F16C 1/12**

(30) Priorité : **03.06.91 FR 9106667**

(43) Date de publication de la demande :
**09.12.92 Bulletin 92/50**

(84) Etats contractants désignés :
**DE ES FR GB IT**

(71) Demandeur : **ACCO LA TELEDYNAMIQUE**
**550 Rue Saint-Just, ZI de Vaux le Pénil**
**F-77005 Melun Cédex (FR)**

(72) Inventeur : **Beaufils, Dominique**
**35 rue des Provinces**
**F-77176 Savigny le Temple (FR)**

(74) Mandataire : **Lejet, Christian Michel**
**Bouju Derambure (Bugnion) S.A. 55, rue**
**Boissonade**
**F-75014 Paris (FR)**

(54) **Commande par cable en deux parties.**

(57)   L'invention concerne une commande par câble en deux parties, la première partie (1) comportant un corps (3) agencé pour recevoir un premier tronçon de câble (4) de façon coulissante et ayant un premier manchon d'extrémité (5) ; un premier embout (6) d'accrochage, par encliquetage élastique, monté à l'extrémité (18) du premier tronçon de câble (4) située vers le premier manchon (5), logé coulissant dans le corps (3) ; la seconde partie (2) comportant une gaine de câble (8) recevant un second tronçon de câble (9) de façon coulissante et ayant un second manchon d'extrémité (10) comprenant un siège (43) pour un second embout (11) ; un second embout (11) d'accrochage par encliquetage élastique, monté à l'extrémité du second tronçon de câble (9) ; le premier et le second embouts (6, 11) étant l'un mâle et l'autre femelle, complémentaires l'un de l'autre et pouvant être accrochés l'un à l'autre par encliquetage élastique.

FIG.1

EP 0 517 583 A1

L'invention concerne une commande par câble en deux parties et le procédé de montage d'une telle commande. Une telle commande par câble est généralement destinée à un véhicule, un appareil ou une machine. Elle est plus spécialement applicable à un accélérateur de véhicule automobile auquel elle est associée. Mais, elle est également applicable pour d'autres utilisations analogues.

On connaît déjà de telles commandes par câble comprenant un corps pouvant être fixé à un tablier du poste de conduite du véhicule; une gaine fixée au corps, un câble monté coulissant dans le corps associé rigidement à l'une de ses extrémités à une manette de commande type starter ou à une pédale ou à un ensemble formant pédalier, et, à son autre extrémité, à un papillon de gaz. Les documents GB-A-2 162 273, GB-A-1 241 548 et GB-A-1 118 165 décrivent des dispositifs semblables. Ces dispositifs, du fait de leur montage rigide avec la commande ou la pièce commandée, ne sont pas adaptés à la mécanisation ou à la robotisation des processus de montage.

Dans l'industrie automobile, on cherche de plus en plus à associer des sous-ensembles fonctionnels et/ou structurels préalablement réalisés. Dans le cas de telles commandes par câble pour accélérateur, celles-ci sont, en général, préalablement réalisées et montées sur le câble de commande. Lors du montage du véhicule, le câble de commande ainsi réalisé reste en attente jusqu'à sa connexion avec l'organe à commander ou l'organe de commande.

Selon le document FR-A-2 604 225, il est proposé un dispositif de ce type pour la mise en place et la connexion quasi automatique d'une liaison par câble coulissant dans une gaine. Cette liaison par câble est destinée à un embrayage. Cette commande comporte un corps rigide venant en butée d'un côté du tablier et s'étendant au delà jusqu'à proximité immédiate de la pédale. Selon le document GB-A-2 200 706, il est proposé une commande à câble de même type plus particulièrement destinée à des systèmes de ventilation de l'intérieur des voitures. Un système conforme à ce document comporte un support positionnant relativement l'une à l'autre l'extrémité du câble et l'extrémité de la gaine de manière à faciliter l'encliquetage de ces deux éléments sur des pièces complémentaires lors de leur montage. Après montage, le support est supprimé. Ces dispositifs permettent une certaine mécanisation des processus de montage, néanmoins, le fait qu'ils soient connectés directement à l'organe de commande ou à l'organe à commander ne permet pas une mécanisation ou robotisation aisée, synonyme d'une meilleure productivité.

Plus récemment se sont développés des dispositifs de commande par câble en deux parties, une première partie étant associée au câble, gainé ou non, issu de l'organe à commander; une deuxième partie étant associée au câble, gainé ou non, issu de l'organe de commande. Un tel dispositif est décrit dans le document DE-U-8 910 999, où chaque partie comprend une section de gaine, une section de fils torsadés et une section de boîtier. Un élément de couplage est monté coulissant à l'intérieur du boîtier formé par les deux sections de boîtier, les extrémités avoisinantes des sections de fils torsadés étant accrochées à l'intérieur de l'élément de couplage. De même, le document US-A-4 884 468 décrit un dispositif comprenant un embout lié à une biellette de commande du dispositif à commander et un embout de guidage lié au câble de commande. La connection s'effectue grâce à un manchon guide, dans lequel coulisse l'embout de biellette, lequel manchon présente une fente par laquelle passe une saillie de l'embout de guidage coopérant avec un trou réalisé dans l'embout de biellette. Ces dispositifs, s'ils améliorent la mécanisation demandent néanmoins des déplacements dans l'espace dans de nombreuses directions, ce qui est incompatible avec une mécanisation poussée.

L'invention est du type commande en deux parties et vise à assurer une meilleure mécanisation et robotisation du montage d'une commande par câble en deux parties en proposant une commande en deux parties pouvant être associées rigidement par déplacement uniquement axial.

A cet effet, la commande par câble est en deux parties pouvant être associées rigidement l'une à l'autre par encliquetage.

La première partie de la commande comporte :
- un corps agencé pour recevoir un premier tronçon de câble de façon coulissante et ayant un premier manchon d'extrémité, pouvant être fixé à l'opposé du manchon à un tablier support tel que celui faisant partie du poste de conduite ;
- un premier embout d'accrochage par encliquetage élastique monté à l'extrémité du premier tronçon de câble située vers le premier manchon, logé coulissant dans le corps, notamment dans le premier manchon ; et
- une saillie interne du premier manchon, élastiquement escamotable, formant un siège pour le premier embout apte à le retenir axialement lors de son accrochage par encliquetage.

La seconde partie de la commande comporte :
- une gaine de câble recevant un second tronçon de câble de façon coulissante et ayant un second manchon d'extrémité comprenant lui-même un siège pour un second embout ; et
- ce second embout d'accrochage par encliquetage élastique monté à l'extrémité du second tronçon de câble située vers le second manchon, pouvant être logé coulissant dans le second manchon.

Selon d'autres caractéristiques, le second embout peut également être coulissant dans le premier manchon ou le corps. Le premier et le second embouts sont l'un mâle et l'autre femelle, complémentaires l'un de l'autre, et peuvent être accrochés l'un à l'autre par encliquetage élastique par suite d'une poussée axiale réciproque convenable, le premier embout étant alors retenu sur la saillie formant siège de la première partie. Le premier et le second manchon sont de formes complémentaires l'une de l'autre et ont des organes d'association axiale réciproque par encliquetage par suite d'une poussée axiale réciproque. La saillie interne du premier manchon est escamotée en laissant coulisser le premier et le second embouts par suite d'une poussée axiale supérieure à celle permettant l'accrochage des premier et second embouts.

L'invention concerne non seulement chacune des deux parties de la commande mais la commande elle-même.

Cette commande peut comprendre, en outre, un compensateur à ressort logé dans le corps de la première partie. Dans la réalisation plus spécialement décrite, le premier embout est l'embout femelle et le second embout est l'embout mâle. L'un des manchons est un manchon femelle et est destiné à envelopper extérieurement l'autre manchon qui est mâle et placé à l'intérieur. Les organes d'association axiale réciproque des deux manchons sont une saillie et une rainure. Dans la réalisation décrite, le premier manchon est le manchon mâle et le second manchon est le manchon femelle.

Dans cette même réalisation, les encliquetages d'association respectifs des embouts et des manchons sont sensiblement simultanés, à partir de la situation où les embouts sont en appui sur leurs sièges respectifs.

Selon un autre aspect, l'invention concerne un procédé de montage d'une telle commande par câble. A partir d'une situation où les deux parties sont dissociées l'une de l'autre, chacun des deux embouts d'accrochage des deux tronçons de câble reposant sur son siège respectif, on procède d'abord à une première étape dans laquelle on commence par amener les deux manchons coaxialement l'un en regard de l'autre ; puis on les rapproche et on les fait coopérer l'un dans l'autre ; et on exerce sur eux une poussée axiale convenable jusqu'à encliquetage d'une part des deux embouts et d'autre part des organes d'association réciproque des deux manchons. On procède ensuite à une seconde étape dans laquelle on réalise une poussée axiale convenable supérieure à la poussée axiale précédente sur le câble en deux tronçons alors solidarisés l'un à l'autre, dans le sens allant du second vers le premier manchon, cette poussée étant suffisante pour escamoter la saillie interne du premier manchon et permettre aux deux embouts solidarisés de franchir cette saillie et venir être logés dans le corps.

Les autres caractéristiques de l'invention résulteront de la description qui suivra en référence aux dessins annexés dans lesquels :

- Les figures 1, 2, 3 sont trois vues schématiques, partielles, en coupe axiale, de la commande selon l'invention dans trois états caractéristiques lors du procédé de montage à savoir : l'état démonté où les deux parties sont dissociées l'une de l'autre (figure 1), l'état juste après encliquetage des deux parties (figure 2) et, enfin, en position de fonctionnement après franchissement par les deux embouts de la saillie formant siège .
- La figure 4 est une vue schématique en coupe par un plan axial d'un poussoir faisant partie du corps de la première partie.
- La figure 5 est une vue d'extrémité du poussoir de la figure 4.
- La figure 6 est une vue schématique en coupe par plan axial, d'un second manchon d'extrémité terminant la gaine de câble de la seconde partie.
- Les figures 7 et 8 sont deux vues schématiques en coupe par un plan axial des embouts mâle et femelle respectivement.
- La figure 9 est une vue selon l'axe de la figure 8 de l'embout femelle.
- Les figures 10, 11, 12 sont trois vues schématiques en coupe par un plan axial, partielle et à plus grande échelle et selon l'axe, respectivement d'une autre variante de réalisation de l'embout femelle.

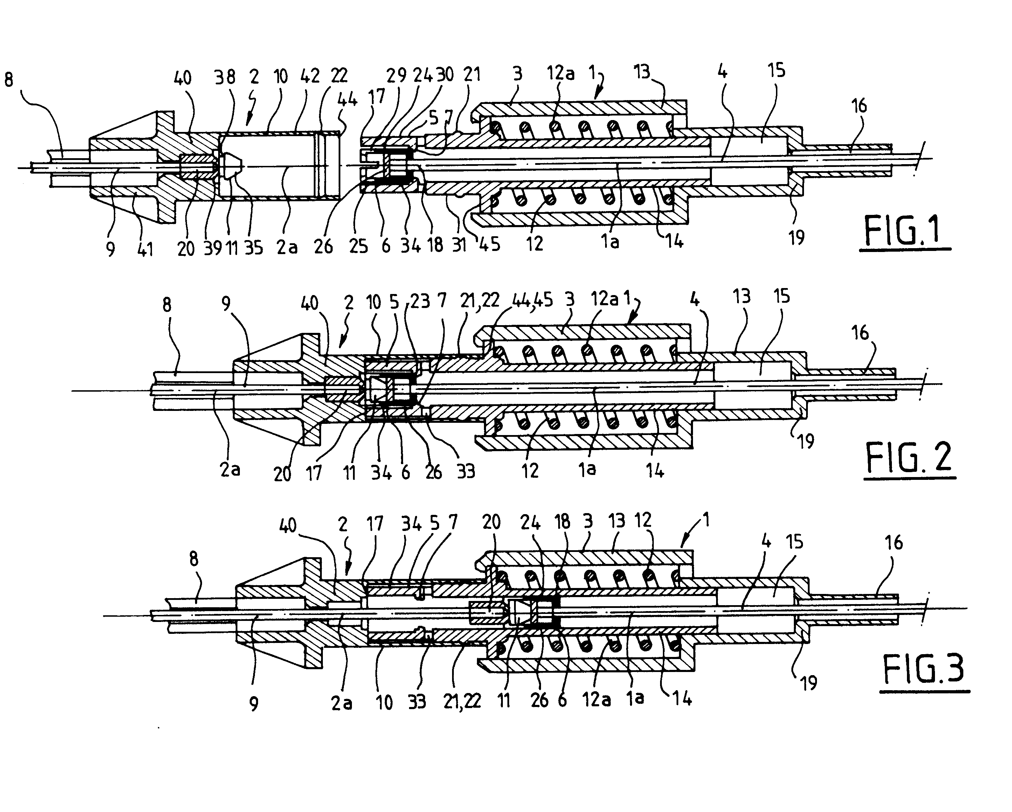

L'invention concerne une commande par câble destinée à un véhicule, un appareil ou une machine en vue d'être associée à un accélérateur ou pour toute autre utilisation analogue. Cette commande comprend deux parties associables l'une à l'autre à savoir une première partie 1 et une seconde partie 2. Ces deux parties sont originellement dissociées l'une de l'autre (figure 1) et peuvent ensuite être associées par encliquetage l'une avec l'autre (figure 2) pour être amenées dans leur situation finale d'utilisation (figure 3). D'une façon générale, la première partie 1 comporte un corps 3, un premier tronçon de câble 4, un premier manchon d'extrémité 5, un premier embout d'accrochage 6 et une saillie interne formant siège 7 ménagée sur et à l'intérieur du premier manchon 5.

La seconde partie 2 comporte une gaine de câble 8, un second tronçon de câble 9, un second manchon d'extrémité 10 et un second embout d'accrochage 11.

Dans la réalisation considérée, destinée à un accélérateur de véhicule, la commande comprend en outre un compensateur à ressort 12 logé dans le corps 3. La première et la seconde parties 1, 2 ont chacune un axe 1a, 2a le long duquel elles s'étendent. Lorsque les deux parties 1, 2 sont associées l'une avec l'autre, les deux axes 1a, 2a sont coaxiaux, les deux parties 1, 2 venant en prolongement l'une de l'autre. En l'occurrence, la première partie 1 est située du côté du pédalier de l'accélérateur tandis que la seconde partie 2 est située du côté du moteur du véhicule comprenant cet accélérateur.

Par convention, pour chacune des parties 1, 2, on qualifie "d'axial" ce qui est considéré le long ou s'étendant parallèlement le long d'un axe 1a, 2a. La qualification de "radial" s'entend par rapport aux axes 1a, 2a. Est qualifié de "transversal" ce qui s'étend dans un plan perpendiculaire à l'axe 1a, 2a.

Dans la réalisation décrite, le corps 3 comprend lui-même deux parties coaxiales assemblées entre-elles à savoir une douille support 13 et une douille poussoir 14 entre lesquelles est interposé le ressort 12a du compensateur 12. Ces deux douilles 13, 14 sont agencées pour autoriser un certain coulissement relatif axial l'une par rapport à l'autre sous une contrainte appropriée. Elles comportent un canal axial 15 dans lequel est monté coulissant le premier tronçon de câble 4. A une extrémité, le corps 3 (en l'occurrence la douille support 13) comporte un passage 16 en communication avec le canal 15 permettant l'émergence, à cet endroit, du premier tronçon de câble 4. A son autre extrémité, le corps 3 (en l'occurrence la douille poussoir 14) forme le premier manchon d'extrémité 5.

Le corps 3 (en l'occurrence la douille support 13) peut être fixé du côté du passage 16 à un tablier support (non représenté) du véhicule.

Le premier manchon d'extrémité 5 est en communication avec le canal axial 15 et ouvert à son bord extrême libre 17 dirigé vers la seconde partie 2.

Le premier embout d'accrochage 6 est monté à l'extrémité 18 du premier tronçon de câble 4 située vers le premier manchon 5 c'est-à-dire à l'opposé du passage 16. Ce premier embout d'accrochage 6 est agencé de manière à coulisser axialement dans le corps 3 notamment le premier manchon 5 ainsi que le canal axial 15. Sa course de coulissement est limitée du fait que la douille support 13 comprend, vers le passage 16, une butée axiale 19.

La saillie interne 7 formant siège pour le premier embout 6 est élastiquement escamotable par écartement radial. Dans sa position normale non escamotée, elle bloque axialement le premier embout 6 lors de son accrochage par encliquetage avec le second embout 11.

Le premier tronçon de câble 4 a une longueur allant du pédalier d'embrayage au premier embout d'accrochage 6.

Le second tronçon de câble 9 a une longueur plus importante de manière à atteindre le papillon de gaz. Il en est de même de la gaine 8 qui, une fois la commande installée, peut avoir un parcours plus ou moins tourmenté nécessité par la configuration du véhicule. La gaine 8 est agencée pour recevoir le second tronçon de câble 9 afin que ce dernier puisse coulisser dans la gaine 8.

Le second manchon d'extrémité 10 est situé à la partie extrême de la gaine 8 dirigée vers la première partie 1. Soit ce second manchon d'extrémité 10 est une pièce rapportée sur la gaine 8, soit il s'agit d'une partie formant corps avec la gaine conformée à cette fin. Le second manchon d'extrémité 10 a une ouverture radiale suffisante pour permettre le logement du second embout 11, le second manchon 10 formant siège pour ce second embout. Ce second embout 11 est monté à l'extrémité libre 20 du second tronçon de câble 9 dirigée vers le second manchon 10 et, lorsque les deux parties 1, 2 sont associées l'une à l'autre vers la première partie 1.

Les premiers et seconds embouts 6, 11 sont l'un mâle et l'autre femelle. Ils ont des formes complémentaires l'un de l'autre et ils peuvent être accrochés l'un à l'autre par encliquetage élastique. Cet encliquetage élastique résulte d'une poussée axiale réciproque relative. Pour permettre cette encliquetage, le premier embout 6 est retenu sur la saillie formant siège 7 tandis que le second embout 11 est sur son siège dans le second manchon 10.

Le premier et le second manchons d'extrémité 5, 10 sont également de formes complémentaires l'une de l'autre et ont des organes d'association axiale réciproque respectivement 21 et 22. L'encliquetage résulte d'une poussée axiale réciproque, relative sur les manchons 5, 10.

Lorsque la saillie interne 7 est escamotée, elle laisse coulisser le premier et le second embouts 6, 11 du premier manchon d'extrémité 5 au canal 15. A cet effet, il est exercé sur les premier et second embouts 6, 11 une poussée axiale supérieure à celle ayant permis préalablement l'accrochage des premier et second embouts 6, 11.

Dans la réalisation considérée représentée sur les dessins à laquelle on se réfère expressément et qui est décrite plus en détail par la suite, le premier embout 6 est l'embout femelle et le second embout 11 est l'embout mâle. L'un des manchons 5, 6 est femelle et destiné à envelopper extérieurement l'autre manchon mâle placé à l'intérieur. En l'occurrence, le premier manchon 5 est le manchon mâle et le second manchon 6 est le manchon femelle.

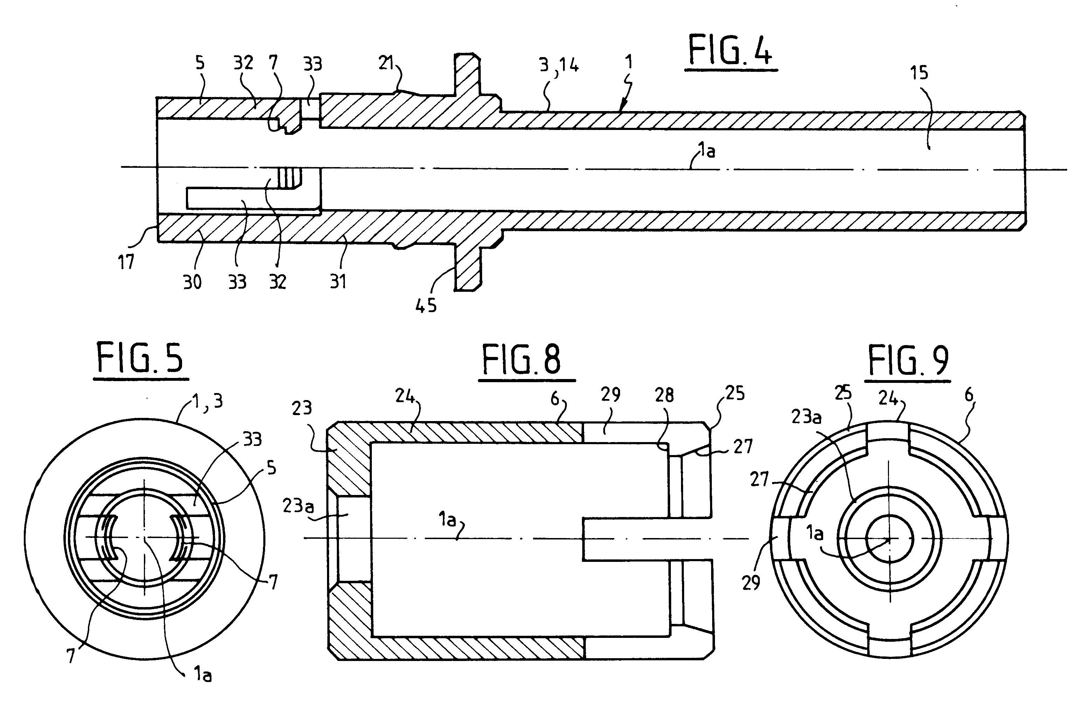

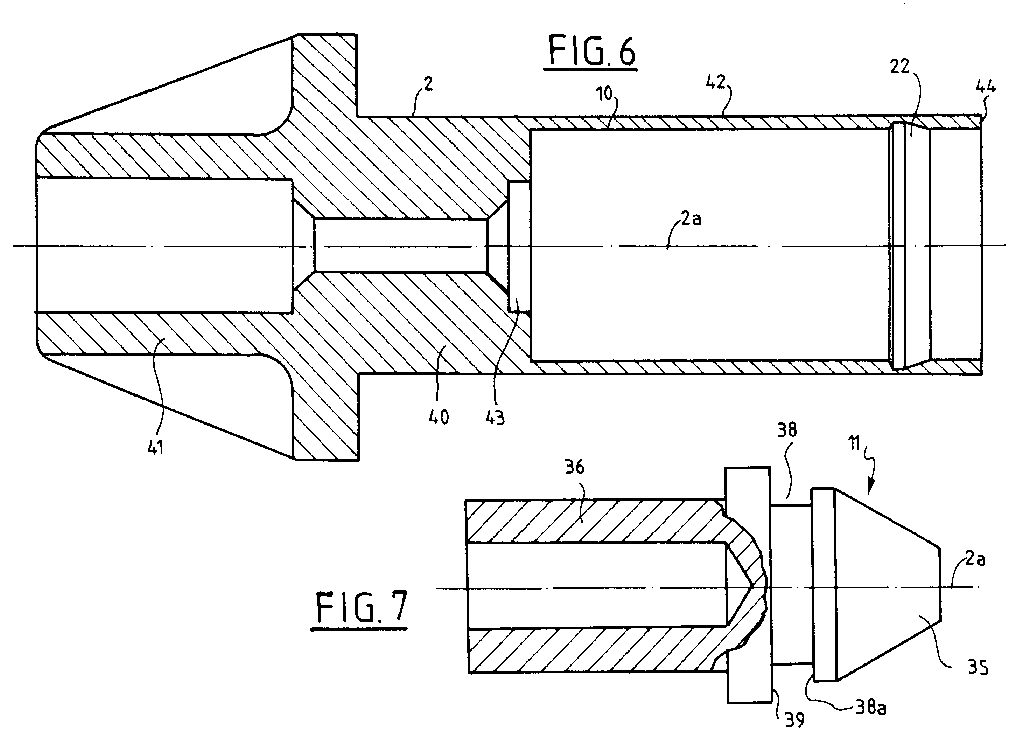

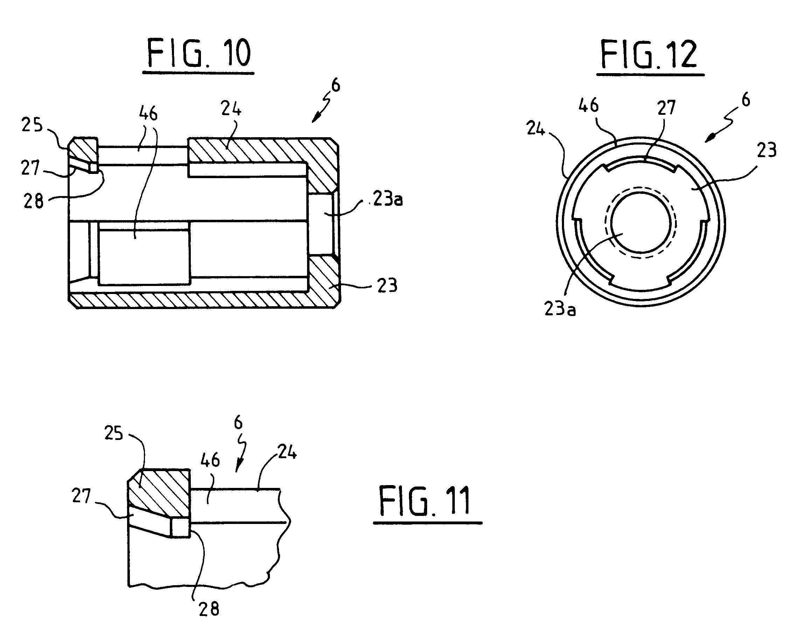

On décrit maintenant plus en détail l'embout femelle à savoir le premier embout 6 en se référant aux figures 8 et 9. Cet embout a une forme générale de douille. Cette douille a un fond 23, transversal, pourvu d'un trou axial 23a et une paroi latérale cylindrique 24. Cette paroi latérale cylindrique 24 a un bord libre périphérique 25 opposé au fond 23. Le fond 23 est traversé grâce au trou 23a par l'extrémité 18 du premier tronçon de câble 4 à laquelle est fixée une rondelle d'arrêt 26 logée dans la douille 6. Le bord libre périphérique 25 qui définit l'ouverture centrale de l'embout 6 est élastiquement déformable en direction radiale dans le sens de l'écartement et comprend une saillie interne d'accrochage 27. Cette saillie 27 a une ouverture évasée, le plus grand côté étant opposé au fond 23 et sa face interne 28 est transversale. Cette disposition permet de favoriser l'encliquetage et l'accrochage de l'embout mâle 11 sans permettre ensuite la dissociation des embouts 6, 11. Pour donner à la saillie 27 l'élasticité radiale nécessaire, il est prévu sur la paroi 24 une ou plusieurs fentes longitudinales 29 s'étendant sur une certaine longueur axiale de la paroi latérale 24 à partir de la saillie 27. A l'état normal c'est-à-dire sans sollicitation extérieure particulière, la saillie 27 se trouve dans la situation dans laquelle elle permet l'accrochage avec l'embout mâle 11. Dans la réalisation représentée, il y a quatre fentes 29 s'étendant sur environ le tiers de la longueur axiale de l'embout 6. La description qui vient d'être faite est indicative d'un mode de réalisation. Un autre mode de réalisation est représenté sur les figures 10, 11, 12. Ce mode de réalisation vise, plus particulièrement, la faisabilité de réalisation. A cet effet, il est utilisé, pour la réalisation de cet embout 6 une sorte de moule à tiroirs radiaux permettant de réaliser des ouvertures transversales 46 ainsi que représenté sur les dessins.

Le premier manchon d'extrémité 5 comprend en sens axial deux tronçons à savoir un premier tronçon 30 attenant à son bord extrême libre 17 et allant jusqu'à la saillie 7 et un second tronçon 31 s'étendant à partir de la saillie 7 jusqu'à l'extrémité du manchon 5 opposée au bord 17. Ces deux tronçons 30, 31 sont seulement théoriques et correspondent à deux parties de la même pièce mais non à deux pièces. Le premier tronçon 30 est donc dirigé, lorsque la commande est montée, vers le second manchon 10 tandis que le second tronçon 31 est dirigé vers la douille support 13. Les deux tronçons 30, 31 sont en communication l'un avec l'autre par le canal 15 lequel est seulement rétréci suffisamment à l'endroit de la saillie 7. Dans son premier tronçon 30, le manchon 5 a une ouverture interne radiale ou diamètre interne permettant le logement à l'intérieur de l'embout femelle 6 avec un certain jeu radial de manière à autoriser la déformation élastique de l'embout femelle 6 notamment de la saillie 27, dans le sens de l'écartement pour l'encliquetage avec l'embout mâle 11.

Dans son second tronçon 31, le canal 15 a une ouverture interne radiale ou diamètre interne permettant le coulissement de l'embout femelle 6 sans jeu radial substantiel et en particulier sans permettre l'écartement radial de la saillie 27. Par conséquent, ce diamètre interne est légèrement plus petit que celui du premier tronçon 30, le diamètre interne de la saillie 7 étant plus petit que ces deux diamètres.

La saillie 7 est située à une distance axiale du bord libre 17 (cette distance est la longueur axiale du premier tronçon 30) qui est substantiellement égale à la longueur axiale de l'embout femelle 6. En conséquence, lorsque l'embout femelle 6 est en appui sur son siège 7, l'embout 6 est substantiellement totalement logé dans le premier manchon 5, les bords libres 17 et 25 étant sensiblement coplanaires.

On décrit maintenant plus spécialement la saillie interne 7. Cette saillie interne est, dans la réalisation considérée, constituée par une extrémité recourbée vers l'axe 1a d'une languette 32 découpée axialement le long du premier manchon 5 dans le premier tronçon 30. Cette languette 32 est limitée par une fente ou découpe 33 en forme générale de U s'étendant axialement. La languette 32 est située à l'intérieur du U.

Préférentiellement il est prévu plusieurs saillies 7 situées dans un même plan transversal notamment régulièrement disposé autour de l'axe 1a. Ainsi, dans la réalisation considérée, il est prévu deux languettes 32, deux fentes ou découpes 33 et donc deux saillies 7 diamétralement opposées.

Au repos c'est-à-dire en l'absence de contrainte extérieure, la saillie 7 saille vers l'axe 1a de manière à former siège pour l'embout femelle 6. la forme de l'embout femelle 6 au voisinage du fond 23, celle complémentaire de la saillie 7 et la force élastique de la saillie 7 sont telles que par une traction axiale suffisante exercée par et sur l'embout femelle 6 (auquel est associé alors l'embout mâle 11) la saillie 7 soit effacée c'est-à-dire écartée radialement de l'axe 1a, l'effacement étant suffisant pour laisser passer par coulissement axial les embouts 6, 11. Il en résulte alors le passage des embouts 6, 11 du premier tronçon 30 vers et dans le second tronçon 31 ce qui correspond alors à la situation dans laquelle la commande peut être utilisée. Pour permettre l'écartement radial de la saillie 7, il est prévu un certain jeu radial 34 entre le premier et le second manchons 5, 10 lorsqu'ils coopèrent l'un avec l'autre et cela transversalement au droit de la saillie 7 et de la languette 32. A cet effet, le diamètre extérieur du premier manchon d'extrémité 5 est légèrement plus important dans le second tronçon 31 que dans le premier tronçon 30. L'accrochage entre les deux manchons 5, 10 est réalisé à l'endroit du second tronçon 31 où se trouve l'organe 21.

On décrit maintenant plus spécialement l'embout mâle à savoir le second embout 11. Cet embout mâle 11 a dans la réalisation considérée une forme arrondie et effilée vers son extrémité libre 35 opposée à celle 36 d'association avec le second tronçon de câble 9. D'autres réalisations fonctionnellement équivalentes sont envisageables.

L'extrémité 36a, dans la réalisation considérée, la forme d'une douille dans le creux axial de laquelle peut être engagée et sertie l'extrémité correspondante 20 du second tronçon de câble 9. L'autre partie de l'embout mâle 11 est pourvue autour, circonférentiellement, à partir de son extrémité libre 35, d'une rainure d'accrochage 38 de l'embout femelle 6 et d'une saillie 39 de blocage axial de cet embout 11 vers la gaine 8. La rainure 38 et la saillie 39 s'étendent radialement et annulairement.

L'ouverture axiale de la rainure 38 correspond à celle du bord libre périphérique 25 formant la saillie 27 de l'embout femelle 6 de manière que lorsque les deux embouts 6, 11 sont associés l'un à l'autre, la saillie 27 soit logée dans la rainure 38 la saillie 27 étant revenue totalement ou presque totalement dans sa position radiale initiale non écartée. Dans cette situation, la face interne 28 de la saillie 27 vient en blocage axial sur le bord 38a de la rainure 38 se trouvant vers l'extrémité libre 35 et donc opposé à la saillie 39. Quant au bord libre périphérique 25, il vient sensiblement contre l'autre bord de la rainure 38 attenant à la saillie 39. La rainure 38 et la saillie 39 sont juxtaposées. L'extrémité libre 35 a, dans la forme de réalisation considérée, une forme générale tronconique, l'ouverture du cône étant en l'occurrence de l'ordre de 60°. Préférentiellement, cette ouverture est la même ou sensiblement la même que celle évasée de l'embout femelle 6 à l'endroit de la saillie d'accrochage 27.

On décrit maintenant plus en détail les organes d'association 21 et 22. Ces organes prennent la forme d'une ou plusieurs saillies et rainures disposées radialement et annulairement et coopérant l'une avec l'autre. Dans la réalisation considérée, il est prévu une saillie annulaire radiale 21 sur le premier manchon 5 plus précisément sur le second tronçon 31. L'organe d'association complémentaire 22 est une rainure annulaire radiale ménagée dans le second manchon 10.

Le second manchon 10 comprend une partie médiane massive 40, une partie extrême 41 d'association avec la gaine 8 et, du côté opposé, une paroi cylindrique 42 constituant le manchon 10 proprement dit. Les parties 40, 41, 42 comportent un canal axial permettant le passage et le coulissement du second tronçon de câble 9 sans permettre le passage de l'embout 11.

La partie médiane 40 comprend, du côté de la paroi cylindrique 42, un creux 43 formant logement pour l'extrémité 36 de l'embout mâle 11 lorsque celui-ci repose sur son siège, au moment de l'association des deux embouts 6, 11. Dans cette situation, il émerge du creux 43 l'extrémité 35 et la rainure 38 qui doivent être accessibles pour l'embout femelle 6.

La paroi cylindrique 42 est agencée pour envelopper extérieurement le premier et le second tronçon 30, 31 du premier manchon 5. Les longueurs axiales du premier et second manchons 5, 10 sont substantiellement égales de manière que lorsque les deux manchons 5, 10 coopèrent, le bord libre 44 de la paroi cylindrique 42 refermant l'ouverture du second manchon 10 vienne en blocage axial contre une saillie radiale 45 de la douille poussoir 14 elle-mêm guidée par et dans la douille support 13 à coulissement axial. De même, le bord libre 17 du premier manchon 5 vient en blocage contre le fond du second manchon 10 à savoir contre la partie médiane 40, autour du creux 43.

On se réfère maintenant expressément à la figure 2 qui correspond à la situation existant au moment de l'encliquetage. on constate que les dimensions et les positions des différentes parties constitutives sont telles que le premier et le second embouts d'accrochage 6, 11 s'encliquettent simultanément avec l'encliquetage des organes d'association 21 et 22. Cette situation résulte de ce que lorsque les embouts d'accrochage 6, 11 sont sur leurs sièges respectifs 7, 43, les distances entre la saillie d'association 21 et la saillie d'accrochage 27 est sensiblement égale avec celle entre la rainure d'association 22 et la rainure 38.

On croit que dans la réalisation considérée, la première partie 1 comprend des saillies d'accrochage ou blocage 7, 21, 27, celles 7, et 27 étant effaçables et la seconde partie 2 comprend les rainures d'accrochage ou association 22, 38.

Lors du montage d'une commande en deux parties 1, 2 telle qu'elle vient d'être décrite, on part d'une situation telle que celle illustrée par la figure 1 où les deux parties 1, 2 sont dissociées l'une de l'autre, chacun des embouts d'accrochage 6, 11 reposant sur son siège respectif 7, 43.

Dans une première étape, on commence par amener les deux manchons 5, 10 coaxialement l'un en regard de l'autre de manière que, comme représenté sur la figure 1, le premier tronçon 30 du premier manchon 5 soit tourné vers le bord 44 de la paroi cylindrique 42 du second manchon 10. Puis, on rapproche l'un de l'autre les deux manchons 5, 10 et on les fait coopérer l'un avec l'autre par coulissement axial le long de l'axe commun 1a, 2a. Dans cette situation, les embouts d'accrochage 6, 11 sont toujours sur leurs sièges respectifs. Le coulissement axial est poursuivi jusqu'à ce que les rainures et saillies 21, 22 d'une part et l'extrémité renflée 35 et la saillie 27 viennent en blocage. On exerce alors sur les deux parties 1, 2 une poussée axiale convenable de manière à provoquer l'encliquetage concomitant ou sensiblement concomitant des deux embouts 6, 11 et des organes d'association 21 et 22. En effet, l'écartement radial de la saillie 27 est rendue possible par l'existence du jeu radial existant avec le premier manchon 5 dans lequel elle est placée. On est alors dans la situation représentée par la figure 2. Dans cette situation, les deux tronçons de câble 4, 9 sont associés l'un à l'autre rigidement par suite de l'association des deux embouts 6, 11.

On peut alors exercer, dans une seconde étape, une poussée axiale convenable supérieure à la poussée axiale ayant permis les encliquetages précédents dans le sens allant du second vers le premier manchon respectivement 10 et 5 de manière à solliciter la ou les saillies 7 dans le sens de l'escamotage puis à permettre cet escamotage du fait du jeu radial 34 ce qui permet aux deux embouts 6, 11 solidarisés l'un à l'autre de franchir la saillie 7 et de venir se loger dans le corps 3 ainsi que représenté sur la figure 3.

**Revendications**

1.  Commande par câble en deux parties destinée à un véhicule, un appareil ou une machine en vue d'être associée à un accélérateur ou pour une autre utilisation analogue caractérisée par :

- une première partie (1) comportant un corps (3) agencé pour recevoir un premier tronçon de câble (4) de façon coulissante et ayant un premier manchon d'extrémité (5) et pouvant être fixé, à l'opposé, à un tablier support ; un premier embout (6) d'accrochage, par encliquetage élastique, monté à l'extrémité (18) du premier tronçon de câble (4) située vers le premier manchon (5), logé coulissant dans le corps (3) ; et une saillie interne (7) du premier manchon (5) élastiquement escamotable, formant un siège pour le premier embout (6) apte à le retenir axialement lors de son accrochage par encliquetage :

et

- une seconde partie (2) comportant une gaine de câble (8) recevant un second tronçon de câble (9) de façon coulissante et ayant un second manchon d'extrémité (10) comprenant un siège (43) pour un second embout (11) ; un second embout (11) d'accrochage par encliquetage élastique, monté à l'extrémité du second tronçon de câble (9) située vers le second manchon (10), pouvant être logé coulissant dans le premier, le second manchons ou le corps (5, 10, 3) ;

- le premier et le second embouts (6, 11) étant l'un mâle et l'autre femelle, complémentaires l'un de l'autre et pouvant être accrochés l'un à l'autre par encliquetage élastique par suite d'une poussée axiale réciproque, le premier embout (6) étant retenu sur la saillie (7) formant siège ;

- le premier et le second manchons (5, 10) étant de formes complémentaires l'une de l'autre et ayant des organes d'association axiale réciproques par encliquetage (21, 22) par suite d'une poussée axiale réciproque ;

- et la saillie interne (7) du premier manchon (5) étant escamotable et laissant coulisser le premier et le second embouts (6, 11) par suite d'une poussée axiale supérieure à celle permettant l'accrochage des premiers et seconds embouts (6, 11).

2. Commande selon la revendication 1, caractérisée par le fait qu'elle comprend, en outre, un compensateur à ressort (12) logé dans le corps (3).

3. Commande selon la revendication 1, caractérisée par le fait que l'embout femelle (6) a une forme de douille dont le bord périphérique libre (25) opposé au fond (23) d'association avec le tronçon de câble correspondant (4) est élastiquement déformable en direction radiale par écartement et comprend une saillie interne (27) d'accrochage de l'embout mâle (11).

4. Commande selon la revendication 1, caractérisée par le fait que l'embout mâle (11) a une forme arrondie et effilée vers son extrémité libre (35) opposée à celle (36) d'association avec le tronçon de câble correspondant (9), cet embout (11) étant pourvu circonférentiellement et à partir de son extrémité libre (35) d'une rainure d'accrochage (38) de l'embout femelle (6) puis d'une saillie (39) de blocage axial.

5. Commande selon l'une quelconque des revendications 1 à 4, caractérisée par le fait que le premier embout (6) est l'embout femelle et le second embout (11) est l'embout mâle.

6. Commande selon l'une quelconque des revendications 1 à 5, caractérisée par le fait que le premier manchon (5) a, vers son tronçon (30) adjacent au bord extrême libre (17) et limité par 1a saillie interne (7), une ouverture interne radiale permettant le logement avec jeu radial de l'embout femelle (6) et autorisant sa déformation élastique pour l'encliquetage de l'embout mâle (11).

7. Commande selon l'une quelconque des revendications 1 à 6, caractérisée par le fait que le premier manchon d'extrémité (5) a dans son second tronçon (31) opposé au premier tronçon (30) une ouverture interne radiale ne permettant pas la déformation élastique de l'embout femelle (6) résultant de l'encliquetage de l'embout mâle (11).

8. Commande selon l'une quelconque des revendications 1 à 7, caractérisée par le fait que la saillie interne d'accrochage (27) de l'embout mâle (11) ménagée sur l'embout femelle (6) est à ouverture évasée et face interne (28) transversale de manière à favoriser l'encliquetage et l'accrochage de l'embout mâle (11) sans permettre ensuite leur dissociation.

9. Commande selon l'une quelconque des revendications 1 à 8, caractérisée par le fait que la saillie (7) formant siège du premier manchon (5) est située à une distance axiale du bord libre (17) substantiellement égale à la longueur axiale du premier embout (6) de manière que le premier embout est en appui sur son siège (7) il soit substantiellement totalement logé dans le premier manchon (5).

10. Commande selon l'une quelconque des revendications 1 à 9, caractérisée par le fait que l'un des deux manchons (5, 10) est femelle et destiné à envelopper extérieurement l'autre manchon mâle et placé à l'intérieur.

11. Commande selon l'une quelconque des revendications 1 à 10, caractérisée par le fait que les organes d'association axiale réciproque (21, 22) sont une saillie et une rainure.

12. Commande selon la revendication 10, caractérisée par le fait que la longueur axiale du manchon mâle (5) est substantiellement égale à la profondeur interne du manchon femelle (10) de manière que lorsque les deux manchons (5, 10) coopèrent l'un avec l'autre, le manchon mâle vienne en butée contre le fond du manchon femelle.

13. Commande selon l'une quelconque des revendications 10 à 12, caractérisée par le fait que le premier manchon (5) est le manchon mâle et le second manchon (10) est le manchon femelle.

14. Commande selon l'une quelconque des revendications 1 à 13, caractérisée par le fait l'encliquetage d'association des embouts (6, 11) et des manchons (5, 10) sont sensiblement simultanés, à partir de la situation où les embouts (6, 11) sont en appui sur leurs sièges (7, 43) respectifs.

15. Commande selon l'une quelconque des revendications 1 à 14, caractérisée par le fait que la saillie interne formant siège (7) est constituée par une extrémité recourbée vers l'intérieur d'au moins une languette (32) découpée axialement le long du premier manchon (5).

16. Sous-ensemble de commande par câble, comportant un corps (3) agencé pour recevoir un tronçon de câble de façon coulissante et ayant un manchon d'extrémité (5) et pouvant être fixé à l'opposé à un tablier support, caractérisé en ce qu'il comprend en outre un embout d'accrochage (6) par encliquetage élastique, monté à l'extrémité (18) du tronçon dans le corps (3), et une saillie interne (7) du manchon (5), élastiquement escamotable, formant un siège pour l'embout (6) apte à le retenir axialement lors de son accrochage par encliquetage, le manchon (5) étant monté coulissant dans le corps (3).

17. Sous-ensemble de commande par câble, comportant une gaine de câble (8) recevant un tronçon de câble (9) de façon coulissante et ayant un manchon d'extrémité (10) comprenant un siège (43) pour un embout (11) monté à l'extrémité (20) du tronçon de câble (9) et pouvant être logé coulissant dans le manchon (10), caractérisé en ce que l'embout (11) est un embout d'accrochage par encliquetage élastique destiné à coopérer avec un embout d'accrochage par encliqyuetage élastique complémentaire (6).

18. Procédé de montage d'une commande par câble en deux parties selon l'une quelconque des revendications 1 à 15, caractérisé par le fait que, à partir d'une situation où les deux parties (1, 2) sont dissociées l'une de l'autre chacun des deux embouts d'accrochage (6, 11) des deux tronçons de câble (4, 9) reposant sur son siège (7, 43),
- on commence par amener les deux manchons (5, 10) coaxialement l'un en regard de l'autre; puis
- on les rapproche et on les fait coopérer l'un dans l'autre; et
- on exerce sur eux une poussée axiale convenable jusqu'à encliquetage d'une part des deux embouts (6, 11) et d'autre part des organes d'association réciproque (21, 22) des deux manchons (5, 10) ; puis
- on réalise une poussée axiale convenable supérieure à la précédente sur le câble en deux tronçons (4, 9) alors solidarisés l'un à l'autre, dans le sens allant du second vers le premier manchon (10, 5) jusqu'à escamoter la saillie interne (7) du premier manchon (5) et permettre aux deux embouts (6, 11) solidarisés l'un à l'autre de franchir cette saillie (7) et être logés dans le corps (3).

19. Procédé de montage d'une commande par câble en deux parties selon l'une quelconque des revendications 2 à 15, à partir d'une situation où les deux parties (1, 2) sont dissociées l'une de l'autre, chacun des embouts d'accrochage (6, 11) des deux tronçons de câble (4, 9) reposant sur son siège (7, 43), caractérisé en ce que, le corps 3 étant fixe,
- on amène les deux parties (1, 2) coaxialement l'une en regard de l'autre;
- on les rapproche et on fait coopérer les deux manchons (5, 10) l'un avec l'autre;
- on exerce une poussée axiale convenable juqu'à encliquetage, d'une part des deux embouts (6, 11), et d'autre part des organes d'association réciproque (21, 22) des manchons (5, 10);
- on exerce une poussée axiale supérieure à la précédente sur les manchons (5,; 10) solidarisés dans le sens du second vers le premier faisant coulisser les manchons (5, 10) solidarisés à l'intérieur du corps (3) fixe, tendant le câble (9) gainé et donnant du jeu au câble (4);
- on bloque le câble (4) et on relâche la poussée axiale de sorte que, sous la poussée du compensateur à ressort (12), les deux embouts (6,11) solidarisés l'un à l'autre franchissent la saillie (7) et se logent dans le corps (3).

FIG.1

FIG.2

FIG.3

## FIG.4

5  32  7  33  21  3,14  1  15

1a

17  30  33  32  31  45

## FIG.5

1,3
33
5
7
7
1a

## FIG.8

23  24  6  29  28  25
23a  27
1a

## FIG.9

23a  25  24  6
27
1a
29

EP 0 517 583 A1

FIG.6

FIG.7

EP 0 517 583 A1

FIG.12

FIG.10

FIG.11

Office européen
des brevets

**RAPPORT DE RECHERCHE EUROPEENNE**

Numero de la demande

EP 92 40 1513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | GB-A-1 241 548 (ROBSON) | 1,6,8 | F16C1/12 |
| A | * le document en entier * | 7,16 | |
| D,Y | DE-U-8 910 999 (VOFA-WERK) | 1,6,8 | |
| A | * le document en entier * | 3,4,17 | |
| D,A | GB-A-2 162 273 (D.B.A.) | 10,11 | |
| | * le document en entier * | | |
| D,A | GB-A-1 118 165 (SMITHS INDUSTRIES) | 17,18 | |
| | * le document en entier * | | |
| D,A | US-A-4 884 468 (MURAMATSU) | 1,17 | |
| | * le document en entier * | | |
| D,A | FR-A-2 604 225 (PEUGEOT) | 17 | |
| | * le document en entier * | | |
| D,A | GB-A-2 200 706 (PAULMANN & CRONE) | 17 | |
| | * le document en entier * | | |
| | ----- | | **DOMAINES TECHNIQUES RECHERCHES (Int. Cl.5 )** |
| | | | F16C B60H |

Le présent rapport a été établi pour toutes les revendications

| Lieu de la recherche | Date d'achèvement de la recherche | Examinateur |
|---|---|---|
| LA HAYE | 19 AOUT 1992 | BALDWIN D. R. |